# EUROPÄISCHE PATENTSCHRIFT

(11) **EP 3 102 476 B1**
(45) Veröffentlichungstag und Bekanntmachung des Hinweises auf die Patenterteilung: **27.12.2017**
(21) Anmeldenummer: 15710770.7
(22) Anmeldetag: 18.03.2015
(51) Int. Cl.: B60S 3/00, B61L 25/02, B61L 27/00, B61L 1/14

(54) **VERFAHREN ZUM ABWICKELN DES VERKEHRS AUF EINEM SCHIENENNETZ UND SCHIENENNETZ MIT EINER ZUG-WARTUNGSANLAGE**
METHOD FOR CONDUCTING TRAFFIC ON A RAIL NETWORK AND RAIL NETWORK WITH A TRAIN MAINTENANCE FACILITY
PROCÉDÉ POUR RÉGLER LA CIRCULATION SUR UN RÉSEAU FERRÉ ET RÉSEAU FERRÉ COMPORTANT UNE INSTALLATION DE MAINTENANCE DE TRAINS

(30) Priorität: 28.03.2014 DE 102014205808
(43) Veröffentlichungstag der Anmeldung: 14.12.2016
(73) Patentinhaber: Siemens Aktiengesellschaft, 80333 München (DE)
(72) Erfinder: HAMMERL, Malte, 38106 Braunschweig (DE); KOHLRUSS, Jacob Johannes, 38116 Braunschweig (DE); LUDWIG, Gunnar, 38667 Bad Harburg (DE)
(86) Internationale Anmeldenummer: PCT/EP2015/055604
(87) Internationale Veröffentlichungsnummer: WO 2015/144503

(56) Entgegenhaltungen:
- WO-A1-2013/043090
- JP-A- 2002 059 815
- US-A- 3 581 335
- US-A- 4 754 515

## Beschreibung

Die Erfindung betrifft ein Verfahren zum Abwickeln des Verkehrs auf einem Schienennetz, das mit einem Leit- und Sicherungssystem ausgerüstet ist und mit dem eine Zug-Wartungsanlage verbunden ist.

Ein bekanntes Verfahren dieser Art verwendet eine Zug-Waschanlage, um Verschmutzungen der äußeren Oberfläche von Zügen zu beseitigen. Derartige Verschmutzungen werden durch Umweltbedingungen, wie Wetter und Stäube, verursacht und können sogar die Betriebssicherheit beeinträchtigen. Bei dem bekannten Verfahren wird der Zug manuell von einem Zugführer mit einer geringen Geschwindigkeit nach einem von der Zug-Waschanlage vorgegebenen Ablauf durch die Zug-Waschanlage gefahren, die sich meist im Bereich einer Abstellanlage befindet. Die korrekte Bedienung und Verantwortung für den Zug und die Zug-Waschanlage obliegt dem Zugführer.

Weiterhin ist aus der Druckschrift WO 2013/043090 ein gattungsgemäßes Verfahren bekannt, bei dem ein Zug mit einem GPS-Empfänger und einem Mobilkommunikationssender versehen werden kann, um seine Position an das Leit- und Sicherungssystem zu kommunizieren, welches dort als Bahnverkehrssteuersystem bezeichnet ist.

Der Erfindung liegt die Aufgabe zugrunde, ein Verfahren mit den Merkmalen des Oberbegriffes des Patentanspruches 1 (WO 2013/043090) derart fortzuentwickeln, dass es vergleichsweise einfach und kostengünstig sowie präzise durchgeführt werden kann.

Zur Lösung dieser Aufgabe werden erfindungsgemäß während der Wartung des Zuges selbsttätig Anlage-Betriebszuständeinformationen von der Zug-War-tungsanlage zu dem Leit-und Sicherungssystem übertragen werden und selbsttätig Bewegungs-Steuersignale an den Zug und Wartungs-Ablaufsignale an die Zug-Wartungsanlage von dem Leit- und Sicherungssystem übertragen.

Ein Vorteil des erfindungsgemäßen Verfahrens besteht darin, dass es zugführerlos betrieben werden kann. Es lässt sich daher besonders gut in einen zugführerlosen Zugbetrieb einschließlich des Depotbetriebs eingliedern, wodurch sich das Abwickeln des automatisierten Verkehrs auf einem Schienennetz besonders günstig gestalten lässt. Ein weiterer Vorteil des erfindungsgemäßen Verfahrens wird darin gesehen, dass unabhängig von einem automatisierten Fahrbetrieb mit dem erfindungsgemäßen Verfahren generell Wartungsarbeiten an Zügen in einfacher Weise automatisiert und damit ohne Personaleinsatz mit der jeweils gewünschten Präzision durchgeführt werden können. Dabei ist in weiterer vorteilhafter Weise steuerungsseitig der aufzubringende Installationsaufwand relativ gering, weil das sowieso vorhandene Leit- und Sicherungssystem zur Durchführung des erfindungsgemäßen Verfahrens mit ausgenutzt wird.

In diesem Zusammenhang ist es besonders vorteilhaft, wenn für jede Zugvariante unter den zu wartenden Zügen unter Berücksichtigung des jeweiligen Wartungsablaufs ein Haltepunkteprofil fest definiert wird, das einmalig fest im Zugsteuerungsgerät der jeweils zu wartenden Zuges hinterlegt wird.

Um einen gewünschten Wartungsablauf in der Zug-Wartungsanlage zu erreichen, ist es vorteilhaft, wenn nach Erreichen mindestens eines fest definierten Haltepunktes in der Zug-Wartungsanlage die Position des Zuges an dem mindestens einen Haltepunkt überprüft und bei einer Position des Zuges an dem Haltepunkt eine Wartungspositions-Meldung zum Leit- und Sicherungssystem übertragen wird,
beim Vorliegen einer Wartungspositions-Meldung von dem Leit-und Sicherungssystem ein Wartungsbefehl als ein Wartungs-Ablaufsignal an die Zug-Wartungsanlage gegeben wird und in der Zug-Wartungsanlage die Wartung des Zuges an dem mindestens einen definierten Haltepunkt durchgeführt wird.

Als vorteilhaft wird es ferner erachtet, wenn die Wartungspositions-Meldung mittels des Zugsteuergeräts des Zuges als eine Zug-Betriebszuständeinformation erzeugt und an das Leit-und Sicherungssystem übertragen wird. Somit wird auch hinsichtlich der Gewinnung der Wartungspositions-Meldung ein nennenswerter zusätzlicher Installationsaufwand vermieden, indem das Zugsteuergerät dazu herangezogen wird.

Die Wartungspositions-Meldung wird vorteilhafterweise von der Zug-Wartungsanlage als eine Anlage-Betriebszuständeinformation erzeugt und an das Leit- und Sicherungssystem übertragen.

Als besonders vorteilhaft wird eine Ausgestaltung des erfindungsgemäßen Verfahrens angesehen, bei der mittels einer vor der Zug-Wartungsanlage endenden und kurz vor dem Ende der Fahrerlaubnis für den jeweils zu wartenden Zug positionierten Ortsmarke von der Ortsmarke ab mittels einer mit dem Zugsteuergerät verbundenen Ortungseinrichtung am zu wartenden Zug die Position des Zuges verfolgt und die Wartungspositions-Meldung als eine Zug-Betriebszuständeinformation erzeugt wird. Damit ist die Möglichkeit geschaffen, den jeweils zu wartenden Zug in der Zug-Wartungsanlage genau in die Position zu steuern, in der eine Wartungshandlung vorgenommen werden soll.

Als Ortungseinrichtung kommen bei dem erfindungsgemäßen Verfahren verschiedene Ortungsanordnungen in Frage. So erscheint es vorteilhaft als Ortungseinrichtung eine Radaranlage mit einem Radargerät am Zuganfang und einem weiteren Radargerät am Zugende zu verwenden. Wobei in vorteilhafter Weise jeweils das Radargerät verwendet wird, das sich außerhalb der Zug-Wartungsanlage befindet.

Dabei ist es auch vorteilhaft, wenn ein Stopp-Punkt hinter der Zug-Wartungsanlage als eine weitere Ortsmarke verwendet wird.

Als Ortungseinrichtung kann in vorteilhafter Weise auch ein Odometer verwendet werden.

Außerdem wird es als vorteilhaft erachtet, wenn nach der Wartung an dem mindestens einen definierten Haltepunkt von der Zug-Wartungsanlage als ein Wartungsablauf-Signal ein Fertig-Signal an das Leit- und Sicherungssystem gesendet wird, woraufhin der Zug mittels eines Bewegungs-Steuersignals in Richtung zu dem weiteren Stopp-Punkt weiter bewegt wird.

Das erfindungsgemäße Verfahren lässt sich mit besonderem Vorteil bei einer als Zug-Waschanlage ausgeführten Zug-Wartungsanlage mit mindestens zwei definierten Haltepunkte der erste Haltepunkt zum Waschen des Zuganfangs und der zweite Haltepunkt zum Waschen des Zugendes verwenden, bei der zwischen den beiden Haltepunkten bei schleichender Fahrt die Flanken des Zuges gewaschen werden. Das Waschen der Züge ist nämlich in der Regel erheblich öfter erforderlich als das Warten der Züge, so dass sich bei dem erfindungsgemäßen Verfahren mit einem Einsatz bei einer Zug-Waschanlage besonders hohe Einsparungen erzielen lassen.

Vorteilhaft ist es ferner, wenn bei dem erfindungsgemäßen Verfahren eine Zug-Wartungsanlage mit einer Sensorik zur Positionserkennung des zu wartenden Zuges eingesetzt wird.

Die Erfindung betrifft ferner ein Schienennetz, das mit einem Leit- und Sicherungssystem ausgerüstet ist und eine Zug-Wartungsanlage enthält, wobei das Leit-und Sicherungssystem geeignet ist, während einer Wartung eines Zuges Zug-Betriebszustände-informationen von dem jeweils gewarteten Zug (4) zu empfangen, und stellt sich die Aufgabe, das Schienennetz im Hinblick auf die Zug-Wartungsanlage vergleichsweise einfach und kostengünstig zu gestalten.

Zur Lösung dieser Aufgabe ist erfindungsgemäß das Leit-und Sicherungssystem geeignet, während der Wartung des Zuges Anlage-Betriebszuständeinformationen von der Zug-Wartungsanlage zu empfangen und Bewegungs-Steuersignale an den Zug und Wartungs-Ablaufsignale an die Zug-Wartungsanlage zu senden.

Die mit dem erfindungsgemäßen Schienennetz erzielbaren Vorteile entsprechen sinngemäß den Vorteilen, die oben im Zusammenhang mit dem erfindungsgemäßen Verfahren angegeben sind.

In vorteilhafter Weise ist für jede Zugvariante unter den zu wartenden Zügen unter Berücksichtigung des jeweiligen Wartungsablaufs ein Haltepunkteprofil fest im Zugsteuerungsgerät des jeweiligen Zuges hinterlegt.

Ferner wird es als vorteilhaft erachtet, wenn bei dem erfindungsgemäßen das Leit-und Sicherungssystem geeignet ist, eine nach Erreichen mindestens eines fest definierten Haltepunkt des Zuges in der Wartungsanlage Wartungspositions-Meldung zu empfangen und beim Vorliegen einer Wartungspositions-Meldung einen Wartungsbefehl als ein Wartungs-Ablaufsignal an die Wartungsanlage zu geben.

Es bietet auch Vorteile, ein Zugsteuergerät einzusetzen, das geeignet ist, die Wartungspositions-Meldung als eine Zug-Betriebszuständeinformation zu erzeugen und an das Leit- und Sicherungssystem zu übertragen.

Es kann aber auch vorteilhaft sein, die Zug-Wartungsanlage so auszugestalten, dass sie geeignet ist, die Wartungspositions-Meldung als eine Anlage-Betriebszuständeinformation zu erzeugen und an das Leit- und Sicherungssystem zu übertragen. Es kann somit die jeweilige Wartungspositions-Meldung auf zweierlei Art oder aus Sicherheitsgründen zweifach erzeugt werden.

Hinsichtlich des genauen Einnehmens einer Wartungsposition ist es vorteilhaft, vor der Zug-Wartungsanlage eine Ortsmarke anzubringen, bis zu der eine Fahrerlaubnis für den jeweils zu wartenden Zug initiierbar ist, und eine mit dem Zugsteuergerät verbundene Ortungseinrichtung am zu wartenden Zug vorzusehen, die Position des Zuges verfolgt und die Wartungspositions-Meldung als eine Zug-Betriebszuständeinformation erzeugt.

Die Ortungseinrichtung kann eine Radaranlage mit einem Radargerät am Zuganfang und einem weiteren Radargerät am Zugende oder ein Odometer sein.

Bei dem erfindungsgemäßen Schienennetz liegt in vorteilhafter Weise hinter der Zug-Wartungsanlage ein Stopp-Punkt als eine weitere Ortsmarke.

Bei dem erfindungsgemäßen Schienennetz ist es ferner vorteilhaft, eine Zug-Wartungsanlage vorzusehen, die geeignet ist, nach der Wartung an dem mindestens einen definierten Haltepunkt als ein Wartungsablauf-Signal ein Fertig-Signal an das Leit- und Sicherungssystem zu senden.

Besonders vorteilhaft ist eine Ausführung der Zug-Wartungsanlage als Zug-Waschanlage.

Es wird auch als vorteilhaft angesehen, wenn die Zug-Wartungsanlage mit einer Sensorik ausgerüstet ist.

Zur weiteren Erläuterung der Erfindung ist in
- Fig. 1: ein Ausschnitt aus einem Ausführungsbeispiel des erfindungsgemäßen Schienennetzes mit einer Zug-Waschanlage mit den für die Erfindung wesentlichen Teilen, in
- Fig. 2: ein Zeitdiagramm zur Beschreibung eines Ausführungsbeispiels des erfindungsgemäßen Verfahrens und in
- Fig. 3: ein zu wartender Zug in seinen verschiedenen Positionen in einer Zug-Waschanlage
dargestellt.

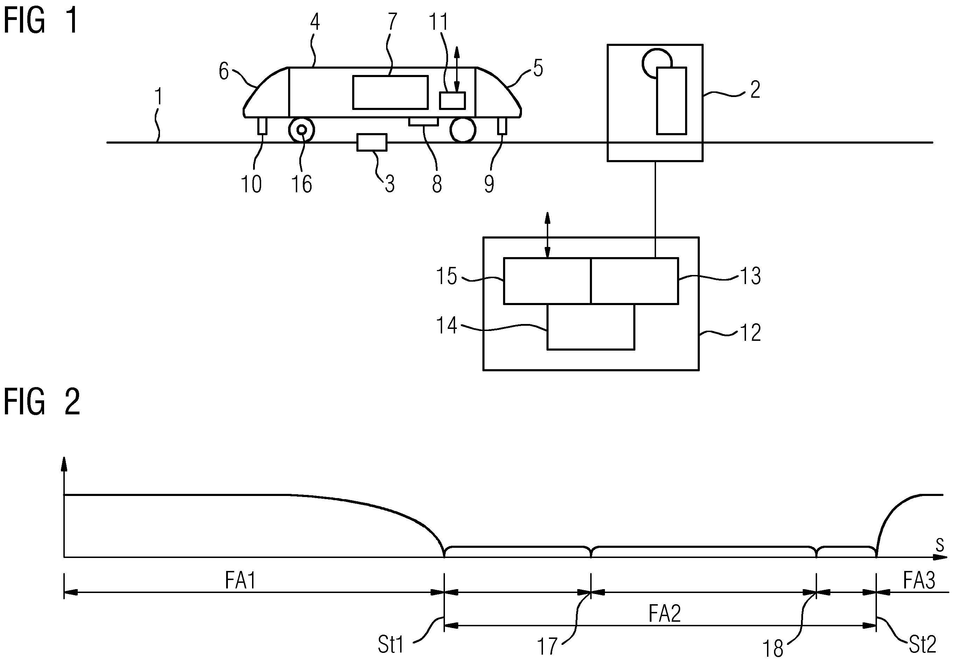

Fig.1 zeigt ein Gleis 1 eines Schienennetzes. Das Gleis 1 verläuft durch eine Zug-Wartungsanlage, die im dargestellten Ausführungsbeispiel als eine Zug-Waschanlage 2 ausgebildet ist. An dem Gleis 1 befindet sich eine Ortsmarke 3, die hier eine Festdatenbalise 3 ist.

Auf dem Gleis 1 befindet sich in Fahrtrichtung auf die Zug-Waschanlage 2 zu ein zu wartender Zug 4 mit einem Zuganfang in Form einer Führerstandkabine 5 und einem Zugende in Form einer weiteren Führerstandkabine 6. Der Zug 4 ist ferner mit einem Zugsteuergerät 7 und mit einem Balisenlesegerät 8 ausgerüstet. Außerdem ist der zu wartende Zug 4 mit einer Radaranlage mit einem Radargerät 9 am Zuganfang und einem weiteren Radargerät 10 am Zugende versehen. Ferner weist der Zug 4 eine Sende- und Empfangseinrichtung 11 auf, über die im bidirektionalen Datenverkehr über Funk Informationen mit einem Leit- und Sicherungssystem 12 des Schienennetzes ausgetauscht werden können. Das Leit- und Sicherungssystem 12 kann ein Stellwerk 13, ein Automatic Train Supervision (ATS)- System und ein Automatic Train Protection (ATP)-System sowie eine nicht dargestellte Sende- und Empfangseinrichtung aufweisen zur Kommunikation u.a. mit der Sende- und Empfangseinrichtung 11 des Zuges 4.

In der in Fig. 1 dargestellten Position ist der Zug 4 aufgrund einer Fahrerlaubnis FA1 (vgl. Fig. 2) seitens des Leit-und Sicherungssystems 12 bereits über eine Ortsmarke bzw. Festdatenbalise 3 bis zu einem ersten Stopp-Punkt St1 vorgefahren; die Ortsmarke dient dazu, die Ortungsgenauigkeit für die folgenden Schritte zu erhöhen. Der Zug 4 fährt auf eine weitere Fahrerlaubnis FA2 hin präzise gesteuert von einem Odometer 16 am Zug 4 und dem einen Radargerät 9 bis zu einem fest definierten Haltepunkt 17 in der Zug-Waschanlage 2, wo dann die zuganfangsseitige Führerstandkabine 5 gewaschen wird.

Nachdem dieser Waschvorgang erfolgt ist, wird der Zug 4 zu einem weiteren Haltepunkt 18 (siehe Fig. 2) im Rahmen der Fahrerlaubnis FA2 in langsamer Fahrt geführt, wobei das Dach des Zuges 4 und die Zugflanken gewaschen werden. Am Haltepunkt 18 schließlich wird die weitere Führerstandskabine 6 am Zugende gewaschen.

Danach erfolgt die Ausfahrt des Zuges 4 aus der Zug-Waschanlage 2 bis zu einem Stopp-Punkt St2 außerhalb der Zug-Waschanlage 2. Auf eine weitere Fahrerlaubnis FA3 von dem Leit- und Sicherungssystem 12 an den Zug 4 wird der Zug 4 nach dem Waschvorgang wieder in das Schienennetz eingebracht.

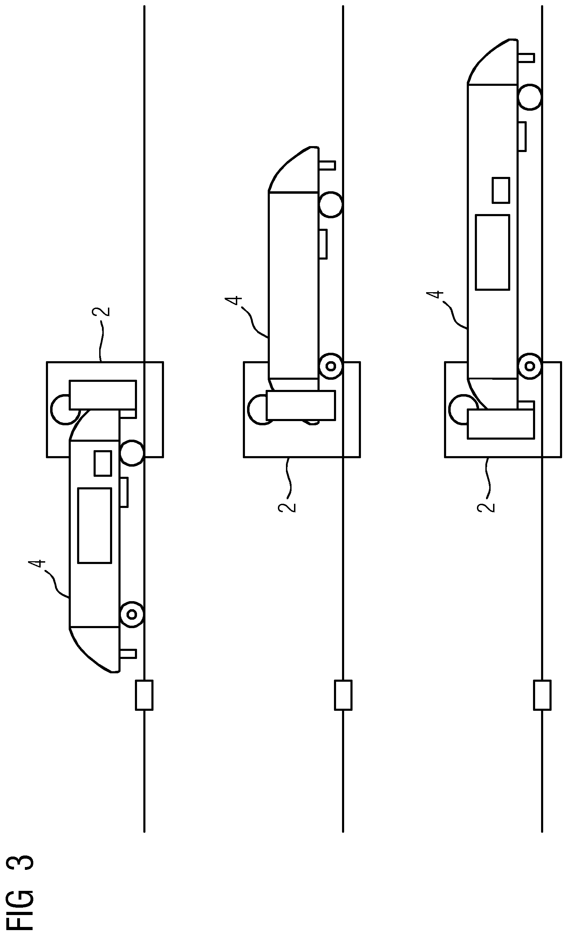

Die Fig. 3 zeigt in ihrer oberen Darstellung den Zug 4 in einer Position, in der die Führerstandkabine 5 am Zuganfang gewaschen wird. Die mittlere Darstellung gibt wieder, in welcher Position die weitere Führerstandkabine 6 gereinigt wird. Die untere Darstellung der Fig. 3 lässt erkennen, dass sich mit dem erfindungsgemäßen Verfahren auch vergleichsweise lange Züge waschen lassen.

Nachstehend wird der Waschvorgang des Zuges 4 in der Zug-Waschanlage 2 in der Reihenfolge seiner einzelnen Schritte S1 bis S23 dargelegt:
S1:Der Zug 4 steht in einem in den Figuren 1 bis 3 nicht gezeigten Ausgangszustand eingeschaltet in einem ebenfalls nicht dargestellten automatisierten Depot; die Zug-Waschanlage 2 ist betriebsbereit; alle weiteren Systeme sind betriebsbereit.
S2:Der Zug 4 bekommt initiiert durch das Leit- und Sicherungssystem 12 ein Bewegungs-Steuersignal in Form einer ersten Fahrerlaubnis FA1, bis zu einem definierten Stopp-Punkt St1 vor der Zug-Waschanlage 2 zu fahren. Die Fahrerlaubnis kann sowohl fahrplangesteuert durch das Leit- und Sicherungssystem 12 als auch manuell durch das Stellen einer Fahrstraße durch den Fahrdienstleiter über das Gleis 1 zur Zug-Waschanlage 2 erfolgen. Die Position der Ortsmarke 3 ist der Ortungsgenauigkeit entsprechend vor dem Stopp-Punkt St1 zu projektieren und sollte mit einem Einfahrsignal in die Zug-Waschlange 2 übereinstimmen.
S3: Der Zug 4 fährt mit zulässiger Geschwindigkeit die Fahrerlaubnis Fa1 ab und hält am Ende an. Dabei überfährt er die Ortsmarke 3, die kurz vor dem Ende der FA1 projektiert ist, um die Ortungsgenauigkeit für die nachfolgenden Schritte zu erhöhen.
S4: Das Leit- und Sicherungssystem 12 fordert den Fahrweg durch die Zug-Waschanlage 2 an. Das Leit- und Sicherungssystem 12 sichert den Fahrweg, der nötig ist, um das geforderte Waschprogramm der Zug-Waschanlage 2 komplett abzufahren. Dies beinhaltet auch die Grundstellung der Zug-Waschanlage 2, die nötig ist damit der Zug bis zum ersten Haltepunkt 17 fahren kann.
S5: Das Leit- und Sicherungssystem 12 produziert als ein weiteres Bewegungsteuer-Signal eine weitere FA2 zum Waschen des Zuges 4. Das Leit- und Sicherungssystem 12 aktiviert ein fest definiertes Halteprofil des Zuges 4. Das Halteprofil beinhaltet mehrere fest definierte Haltepunkte 17 und 18. Diese Haltepunkte 17 und 18 sind mit dem Waschprogramm und der zu waschenden Zugkonfiguration abgestimmt, so dass der Zug 4 immer in der richtigen Position anhält um z.B. die Führerstandkabinen 5 und 6 zu waschen. Innerhalb der weiteren Fahrerlaubnis FA2 bekommt der Zug 4 vom Leit- und Sicherungssystem 12 immer ein Signal, wenn er den nächsten Haltepunkt anfahren soll. Weiterhin wird diese weitere Fahrerlaubnis FA2 mit einer schleichenden Geschwindigkeit von 3-5 km/h ausgeführt. Diese Geschwindigkeit wird durch das Zugsteuergerät 7 geregelt.
S6: Der Zug 4 bekommt vom Leit- und Sicherungssystem 12 als ein Bewegungssteuer-Signal eine Aufforderung den ersten Haltepunkt 17 in der FA2 anzufahren. Dieser Haltepunkt 17 liegt so, dass die Führerstandkabine 5 gewaschen werden kann. S7: Der Zug fährt mit schleichender Geschwindigkeit 3-5 km/h so lange, bis er den Haltepunkt 17 erreicht hat und hält sofort an. Die Geschwindigkeitsregelung wird dabei vom Zug 4 selbst bzw. von seinem Zugsteuergerät 7 übernommen und immer vom Zugsteuergerät 7 überwacht. Aufgrund der langsamen Geschwindigkeit kann der Zug 4 sehr genau am Haltepunkt 17 anhalten.
S8: Der Zug 4 meldet dem Leit- und Sicherungssystem 12 in Form einer Betriebszustände-Information, dass er den ersten Haltepunkt zum Waschen der einen Führerstandkabine 5 erreicht hat.
S9: Das Leit- und Sicherungssystem 12 fragt bei der Zug-Waschanlage 2 an, ob der Zug 4 in der richtigen Position zum Waschen der einen Führerstandkabine 5 steht. Sollte dies nicht der Fall sein, würde die Zug-Waschanlage 2 zurückmelden, dass der Zug nicht zum Waschen bereitsteht. Daraufhin müsste der Zug 4 manuell durch die Zug-Waschanlage 2 gefahren werden oder der Haltepunkt manuell korrigiert werden.
S10: Die Zug-Waschanlage 2 meldet dem Leit- und Sicherungssystem über eine sichere
   Schnittstelle in Form einer Wartungspositions- bzw. Waschpositions-Meldung, dass der Zug zum Waschen bereitsteht.
S11: Das Leit- und Sicherungssystem 12 fordert daraufhin mittels eines Wartungs- bzw. Waschbefehls das Waschen der Führerstandkabine 5 von der Zug-Waschanlage 2 an.
S12: Die Zug-Waschanlage 2 führt die Waschung der Führerstandkabine 5 durch und meldet dem Leit- und Sicherungssystem 12 in Form eines Wartungs- bzw. Waschablaufsignals als Fertigsignal, dass sie fertig ist.
S13: Das Leit- und Sicherungssystem 12 fordert nun das Waschen der Zugflanken bzw. des Zugdaches des Zuges 4 mittels eines Wartungs- bzw. Wasch-Ablaufsignals an. Hierzu fordert es das notwendige Waschprogramm bei der Zug-Waschanlage 2 an. Zudem teilt es dem Zugsteuergerät 7 mit, den nächsten Haltepunkt 18 anzufahren.
S14: Daraufhin fährt der Zug 4 mit entsprechender Geschwindigkeit (3-5 km/h) wieder los, bis er den nächsten Haltepunkt 18 erreicht hat und wird dabei an seinem Dach und seinen Flanken gewaschen.
S15: Der Zug 4 meldet dem Leit- und Sicherungssystem 12 über das ATP-System 15 mittels einer Betriebszuständeinformation, dass er den zweiten Haltepunkt 18 zum Waschen der weiteren Führerstandkabine 6 erreicht hat.
S16: Das Leit- und Sicherungssystem 12 fragt die Zug-Waschanlage 2 an, ob der Zug 4 in der richtigen Position zum Waschen der weiteren Führerstandkabine 6 steht. Sollte dies nicht der Fall sein, würde die Zug-Waschanlage 2 zurück melden, dass der Zug 4 nicht zum Waschen bereit steht. Daraufhin müsste der Zug manuell durch die Zug-Waschanlage 2 gefahren werden oder der Haltepunkt manuell korrigiert werden.
S17: Die Zug-Waschanlage 2 meldet dem Leit- und Sicherungssystem 12 über eine sichere Schnittstelle, dass der Zug 4 zum Waschen bereitsteht.
S18: Das Leit- und Sicherungssystem 12 fordert daraufhin das Waschen der weiteren Führerstandkabine 6 bei der Zugwaschanlage mittels eines Wartungs- bzw. Wasch-Ablaufsignals an. S19: Die Zug-Waschanlage 2 führt die Waschung der weiteren Führerstandkabine 6 durch und meldet dem Leit- und Sicherungssystem 12 in Form einer Anlage Betriebsinformation, dass sie fertig ist.
S20: Das Leit- und Sicherungssystem 12 fordert nun das Zugsteuergerät 7 mittels eines Bewegung-Steuersignals auf, die Zug-Waschanlage 2 zu verlassen. Hierzu wird der weitere Stopp-Punkt St2 der weiteren Fahrerlaubnis FA2 vom Zug 4 angefahren.
S21: Der Zug 4 fährt los und räumt somit die Zug-Waschanlage 2. Nachdem er den weiteren Stopp-Punkt St2 erreicht hat, meldet er dem Leit- und Sicherungssystem 12, dass er wieder betriebsbereit ist.
S22: Die Zug-Waschanlage 2 meldet dem Leit- und Sicherungssystem 12 in Form einer Anlage-Betriebszuständeinformation, dass die Grundstellung erreicht ist.
S23: Der Zug 4 kann über das Zugsteuergerät 7 gesteuert eine neue Fahrerlaubnis FA3 empfangen, dessen Fahrziel beliebig ist.

## Patentansprüche

1. Verfahren zum Abwickeln des Verkehrs auf einem Schienennetz, das mit einem Leit- und Sicherungssystem (12) ausgerüstet ist und mit dem eine Zug-Wartungsanlage (2) verbunden ist,
bei dem während einer Wartung eines Zuges (4) selbsttätig Zug-Betriebszuständeinformationen von dem jeweils gewarteten Zug (4) zu dem Leit-und Sicherungssystem (12) übertragen werden,
**dadurch gekennzeichnet, dass**
während der Wartung des Zuges (4) selbsttätig Anlage-Betriebszuständeinformationen von der Zug-Wartungsanlage (2) zu dem Leit-und Sicherungssystem (12) übertragen werden und selbsttätig Bewegungs-Steuersignale an den Zug (4) und Wartungs-Ablaufsignale an die Zug-Wartungsanlage (2) von dem Leit- und Sicherungssystem (12) übertragen werden.

2. Verfahren nach Anspruch 1,
**dadurch gekennzeichnet, dass**
für jede Zugvariante unter den zu wartenden Zügen (4) unter Berücksichtigung des jeweiligen Wartungsablaufs ein Haltepunkteprofil fest definiert wird, das einmalig fest im Zugsteuerungsgerät der jeweils zu wartenden Zuges (4) hinterlegt wird.

3. Verfahren nach Anspruch 1 oder 2,
**dadurch gekennzeichnet, dass**
nach Erreichen mindestens eines fest definierten Haltepunktes (17) in der Zug-Wartungsanlage (2) die Position des Zuges (4) an dem mindestens einen Haltepunkt (17) überprüft und bei einer Position des Zuges (4) an dem Haltepunkt (17) eine Wartungspositions-Meldung zum Leit- und Sicherungssystem (12) übertragen wird,
beim Vorliegen einer Wartungspositions-Meldung von dem Leit-und Sicherungssystem (12) ein Wartungsbefehl als ein Wartungs-Ablaufsignal an die Zug-Wartungsanlage (2) gegeben wird und
in der Zug-Wartungsanlage (2) die Wartung des Zuges (4) an dem mindestens einen definierten Haltepunkt (17) durchgeführt wird.

4. Verfahren nach Anspruch 3,
**dadurch gekennzeichnet, dass**
die Wartungspositions-Meldung mittels des Zugsteuergeräts (7) des Zuges (4) als eine Zug-Betriebszuständeinformation erzeugt und an das Leit- und Sicherungssystem (12) übertragen wird.

5. Verfahren nach Anspruch 3 oder 4,
**dadurch gekennzeichnet, dass**
die Wartungspositions-Meldung von der Zug-Wartungsanlage (2) als eine Anlage-Betriebszuständeinformation erzeugt und an das Leit- und Sicherungssystem (12) übertragen wird.

6. Verfahren nach einem der Ansprüche 3 bis 5,
**dadurch gekennzeichnet, dass** mittels einer vor der Zug-Wartungsanlage (2) an einem Stopp-Punkt (St1) endenden und kurz vor dem Ende der Fahrerlaubnis (FA1) für den jeweils zu wartenden Zug (4) positionierten Ortsmarke (3) von der Ortsmarke (3) ab mittels einer mit dem Zugsteuergerät (7) verbundenen Ortungseinrichtung (9,10;16) am zu wartenden Zug (4) die Position des Zuges (4) verfolgt und die Wartungspositions-Meldung als eine Zug-Betriebszuständeinformation erzeugt wird.

7. Verfahren nach Anspruch 6,
**dadurch gekennzeichnet, dass**
als Ortungseinrichtung eine Radaranlage mit einem Radargerät (9) am Zuganfang und einem weiteren Radargerät (10) am Zugende verwendet wird.

8. Verfahren nach Anspruch 6 oder 7,
**dadurch gekennzeichnet, dass**
jeweils das Radargerät (9,10) verwendet wird, das sich außerhalb der Zug-Wartungsanlage (2) befindet.

9. Verfahren nach einem der Ansprüche 6 bis 8,
**dadurch gekennzeichnet, dass**
ein weiterer Stopp-Punkt (St2) hinter der Zug-Wartungsanlage (2) als eine weitere Ortsmarke verwendet wird.

10. Verfahren nach Anspruch 6,
**dadurch gekennzeichnet, dass** als Ortungseinrichtung ein Odometer (16) verwendet wird.

11. Verfahren nach einem der vorangehenden Ansprüche,
**dadurch gekennzeichnet, dass**
nach der Wartung an dem mindestens einen definierten Haltepunkt (17) von der Zug-Wartungsanlage (2)als ein Wartungsablauf-Signal ein Fertig-Signal an das Leit- und Sicherungssystem (12) gesendet wird, woraufhin der Zug (4) mittels eines Bewegungs-Steuersignals in Richtung zu dem weiteren Stopp-Punkt (St2) weiter bewegt wird.

12. Verfahren nach einem der vorangehenden Ansprüche,
**dadurch gekennzeichnet, dass**
bei einer als Zug-Waschanlage (2) ausgeführten Zug-Wartungsanlage mit mindestens zwei definierten Haltepunkte (17,18) der erste Haltepunkt (17) zum Waschen des Zuganfangs und der zweite Haltepunkt (18) zum Waschen des Zugendes verwendet wird und zwischen den beiden Haltepunkten (17,18) bei schleichender Fahrt das Dach und die Flanken des Zuges (4) gewaschen werden.

13. Verfahren nach einem der vorangehenden Ansprüche,
**dadurch gekennzeichnet, dass**
eine Zug-Wartungsanlage mit einer Sensorik zur Positionserkennung des zu wartenden Zuges eingesetzt wird.

14. Schienennetz, das mit einem Leit- und Sicherungssystem (12) ausgerüstet ist und eine Zug-Wartungsanlage (2) enthält, wobei das Leit-und Sicherungssystem (12) geeignet ist, während einer Wartung eines Zuges (4) Zug-Betriebszuständeinformationen von dem jeweils gewarteten Zug (4) zu empfangen,
**dadurch gekennzeichnet, dass**
das Leit-und Sicherungssystem (12) geeignet ist, während der Wartung des Zuges (4) Anlage-Betriebszuständeinformationen von der Zug-Wartungsanlage (2) zu empfangen und Bewegungs-Steuersignale an den Zug (4) und Wartungs-Ablaufsignale an die Zug-Wartungsanlage (2) zu senden.

15. Schienennetz nach Anspruch 14,
**dadurch gekennzeichnet, dass**
für jede Zugvariante unter den zu wartenden Zügen (4) unter Berücksichtigung des jeweiligen Wartungsablaufs ein Haltepunkteprofil fest im Zugsteuerungsgerät des jeweiligen Zuges (4) hinterlegt ist.

## Claims

1. Method for conducting traffic on a rail network which is fitted with a train control system (12) and is connected to a train maintenance facility (2),
wherein during maintenance of a train (4), train operating status information is automatically transmitted from the respective train (4) being maintained to the train control system (12),
**characterised in that**
during the maintenance of the train (4), facility operating status information is automatically transmitted from the train maintenance facility (2) to the train control system (12) and movement control signals are automatically transmitted to the train (4) and maintenance process signals are automatically transmitted to the train maintenance facility (2) by the train control system (12).

2. Method according to claim 1,
**characterised in that**
for each train variant among the trains (4) to be maintained, taking into consideration the respective maintenance process, a stopping point profile is permanently defined which is stored once permanently in the train control device of the respective train (4) to be maintained.

3. Method according to claim 1 or 2,
**characterised in that**
on reaching at least one permanently defined stopping point (17) in the train maintenance facility (2) the position of the train (4) at the at least one stopping point (17) is checked and at a position of the train (4) at the stopping point (17) a maintenance position message is transmitted to the train control system (12),
if a maintenance position message from the train control system (12) exists a maintenance command is given to the train maintenance facility (2) as a maintenance process signal and in the train maintenance facility (2) the maintenance of the train (4) is performed at the at least one defined stopping point (17).

4. Method according to claim 3,
**characterised in that**
the maintenance position message is generated by means of the train control device (7) of the train (4) as train operating status information and is transmitted to the train control system (12).

5. Method according to claim 3 or 4,
**characterised in that**
the maintenance position message is generated by the train maintenance facility (2) as facility operating status information and is transmitted to the train control system (12).

6. Method according to one of claims 3 to 5,
**characterised in that**
the position of the train (4) is tracked, by means of a location marker (3) ending upstream of the train maintenance facility (2) at a stopping point (St1) and positioned shortly before the end of the movement authority (FA1) for the respective train (4) to be maintained, from the location marker (3) onwards by means of locating equipment (9,10;16) connected to the train control device (7) on the train (4) to be maintained, and the maintenance position message is generated as train operating status information.

7. Method according to claim 6,
**characterised in that**
a radar system with a radar device (9) at the front of the train and a further radar device (10) at the end of the train is used as locating equipment.

8. Method according to claim 6 or 7,
**characterised in that**
in each case the radar device (9,10) is used which is located outside the train maintenance facility (2).

9. Method according to one of claims 6 to 8,
**characterised in that**
a further stopping point (St2) downstream of the train maintenance facility (2) is used as a further location marker.

10. Method according to claim 6,
**characterised in that**
an odometer (16) is used as locating equipment.

11. Method according to one of the preceding claims,
**characterised in that**
after the maintenance at the at least one defined stopping point (17) a ready signal is sent to the train control system (12) from the train maintenance facility (2) as a maintenance process signal, whereupon the train (4) is moved further by means of a movement control signal towards the further stopping point (St2).

12. Method according to one of the preceding claims,
**characterised in that**
in the case of a train maintenance facility implemented as a train washing facility (2) with at least two defined stopping points (17,18) the first stopping point (17) is used for washing the front of the train and the second stopping point (18) is used for washing the end of the train and between the two stopping points (17,18) the roof and sides of the train (4) are washed at a crawling speed.

13. Method according to one of the preceding claims,
**characterised in that**
a train maintenance facility with sensors for determining the position of the train to be maintained is used.

14. Rail network, which is equipped with a train control system (12) and contains a train maintenance facility (2), wherein the train control system (12) is suitable, during maintenance of a train (4), for receiving train operating status information from the respective train (4) being maintained,
**characterised in that**
the train control system (12) is suitable, during the maintenance of the train (4), for receiving facility operating status information from the train maintenance facility (2) and for sending movement control signals to the train (4) and maintenance process signals to the train maintenance facility (2).

15. Rail network according to claim 14,
**characterised in that**
for each train variant among the trains (4) to be maintained, taking into consideration the respective maintenance process, a stopping point profile is permanently stored in the train control device of the respective train (4).

## Revendications

1. Procédé pour faire se dérouler la circulation sur un réseau ferré, équipé d'un système (12) de conduite et de sécurité et relié à une installation (2) d'entretien de train,
dans lequel, pendant l'entretien d'un train, automatiquement, des informations d'état de fonctionnement de train sont transmises du train (4) en entretien au système (12) de conduite et de sécurité,
**caractérisé en ce que**
pendant l'entretien du train (4), automatiquement, des informations d'état de fonctionnement d'installation sont transmises de l'installation (2) d'entretien des trains au système (12) de conduite et de sécurité et, automatiquement, des signaux de commande de déplacement sont transmis au train (4) et des signaux de déroulement d'entretien sont transmis à l'installation (2) d'entretien des trains par le système (12) de conduite et de sécurité.

2. Procédé suivant la revendication 1,
**caractérisé en ce que**
pour chaque variante de train parmi les trains (4) à entretenir, on définit, en tenant compte du déroulement respectif de l'entretien, un profil de point d'arrêt, que l'on mémorise, une fois fixement, dans l'appareil de commande du train (4) à entretenir.

3. Procédé suivant la revendication 1 ou 2,
**caractérisé en ce qu'**
après avoir atteint au moins un point (17) d'arrêt défini de manière fixe dans l'installation (2) d'entretien des trains, on contrôle la position du train (4) en le au moins un point (17) d'arrêt et, pour une position du train (4) au point (17) d'arrêt, on transmet un message de position d'entretien au système (12) de conduite et de sécurité,
en présence d'un message de position d'entretien, il est donné, par le système (12) de conduite et d'entretien à l'installation (2) d'entretien des trains, une instruction d'entretien sous la forme d'un signal de déroulement de l'entretien et
dans l'installation (2) d'entretien des trains, l'entretien du train (4) est effectué en le au moins un point (17) d'arrêt défini.

4. Procédé suivant la revendication 3,
**caractérisé en ce que**
le message de position d'entretien est produit au moyen de l'appareil (7) de commande du train (4), sous la forme d'une information d'état de fonctionnement de train et est transmis au système (12) de conduite et de sécurité.

5. Procédé suivant la revendication 3 ou 4,
**caractérisé en ce que**
le message de position d'entretien est produit par l'installation (2) d'entretien des trains, sous la forme d'une information d'état de fonctionnement d'installation et est transmis au système (12) de conduite et de sécurité.

6. Procédé suivant l'une des revendications 3 à 5,
**caractérisé en ce qu'**
au moyen d'un repère (3) de localisation se terminant en un point (St1) d'arrêt, avant l'installation (2) d'entretien des trains et placé peu avant la fin de l'autorisation (FA1) de roulement pour le train (4) à entretenir, on suit, à partir du repère (3) de localisation, au moyen d'un dispositif (9; 10; 16) relié à l'appareil (7) de commande du train, sur le train (4) à entretenir la position du train (4) et on produit le message de position d'entretien sous la forme d'une information d'état de fonctionnement du train.

7. Procédé suivant la revendication 6,
**caractérisé en ce que**
l'on utilise comme dispositif de localisation un système radar ayant un appareil (9) radar au début du train et un autre appareil (10) radar à la fin du train.

8. Procédé suivant la revendication 6 ou 7,
**caractérisé en ce que**
l'on utilise l'appareil (9, 10) radar, qui se trouve à l'extérieur de l'installation (2) d'entretien des trains.

9. Procédé suivant l'une des revendications 6 à 8,
**caractérisé en ce que**
l'on utilise un autre point (St2) d'arrêt derrière l'installation (2) d'entretien des trains comme autre repère de localisation.

10. Procédé suivant la revendication 6,
**caractérisé en ce que**
l'on utilise un odomètre (16) comme dispositif de localisation.

11. Procédé suivant l'une des revendications précédentes,
**caractérisé en ce qu'**
après l'entretien, en le au moins un point (17) d'arrêt défini, on envoie au système (12) de conduite et de sécurité, par l'installation (2) d'entretien des trains, comme signal de déroulement de l'entretien, un signal fini, puis on redéplace le train (4) au moyen d'un signal de commande de déplacement, en direction de l'autre point (St2) d'arrêt.

12. Procédé suivant l'une des revendications précédentes,
**caractérisé en ce que**,
pour une installation d'entretien des trains réalisée en installation (2) de lavage des trains et ayant au moins deux points (17, 18) d'arrêt définis, on utilise le premier point (17) d'arrêt pour laver le début du train et le deuxième point (18) d'arrêt pour laver la fin du train et, entre les deux points (17, 18) d'arrêt, on lave, en marche très lente, le toit et les flancs du train (4).

13. Procédé suivant l'une des revendications précédentes,
**caractérisé en ce que**,
l'on utilise une installation d'entretien des trains ayant un capteur de détection de position du train en entretien.

14. Réseau ferré équipé d'un système (12) de conduite et de sécurité et comportant une installation (2) d'entretien des trains, dans lequel le système (12) de conduite et de sécurité est propre à recevoir, pendant qu'un train (4) est en entretien, des informations d'état de fonctionnement du train (4) en entretien,
**caractérisé en ce que**
le système (12) de conduite et de sécurité est propre à recevoir, pendant l'entretien du train (4), des informations d'état de fonctionnement d'installation de l'installation (2) d'entretien des trains et à émettre des signaux de commande de déplacement vers le train (4) et des signaux de déroulement d'entretien vers l'installation (2) d'entretien des trains.

15. Réseau ferré suivant la revendication 14,
**caractérisé en ce que**,
pour chaque variante de train parmi les trains (4) en entretien, il est mémorisé, en tenant compte du déroulement de l'entretien, un profil de point d'arrêt fixement dans l'appareil de commande du train (4).
